# EUROPÄISCHE PATENTSCHRIFT

(11) **EP 3 289 419 B1**
(45) Veröffentlichungstag und Bekanntmachung des Hinweises auf die Patenterteilung: **09.10.2019**
(21) Anmeldenummer: 16723946.6
(22) Anmeldetag: 28.04.2016
(51) Int. Cl.: G05B 23/02, B60W 50/02

(54) **VERFAHREN ZUR ÜBERWACHUNG EINES ELEKTRONISCHEN STEUERGERÄTS FÜR EIN KRAFTFAHRZEUG**
METHOD FOR MONITORING AN ELECTRONIC CONTROL UNIT AND CONTROL UNIT FOR A MOTOR VEHICLE
PROCÉDÉ PERMETTANT DE SURVEILLER UNE UNITÉ DE COMMANDE ÉLECTRONIQUE ET UNITÉ DE COMMANDE DESTINÉE À UN VÉHICULE AUTOMOBILE

(30) Priorität: 29.04.2015 DE 102015207895
(43) Veröffentlichungstag der Anmeldung: 07.03.2018
(73) Patentinhaber: CPT Group GmbH, 30165 Hannover (DE)
(72) Erfinder: RIEPL, Thomas, 93077 Bad Abbach (DE); PECK, Stefan, 92053 Regensburg (DE)
(86) Internationale Anmeldenummer: PCT/EP2016/059457
(87) Internationale Veröffentlichungsnummer: WO 2016/174118

(56) Entgegenhaltungen:
- DE-A1-102004 017 660
- DE-A1-102008 019 463
- DE-A1-102009 046 394
- US-B1- 7 474 989

## Beschreibung

Die vorliegende Offenbarung betrifft ein Verfahren zur Überwachung eines elektronischen Steuergeräts für ein Kraftfahrzeug, sowie eine Vorrichtung zur Durchführung des Verfahrens. Weiter betrifft die vorliegende Offenbarung ein Steuergerät für ein Kraftfahrzeug.

Der Ausfall eines elektronischen Steuergeräts in einem Kraftfahrzeug kann die Funktion des Gesamtsystems beeinträchtigen. Insbesondere kann das Kraftfahrzeug ebenfalls in seiner Funktion gestört werden oder vollständig funktionsunfähig werden. Ein unvorhersehbarer Ausfall des Kraftfahrzeugs kann zu finanziellen, zeitlichen und gesundheitlichen Einbußen führen, beispielsweise durch Unfälle oder ungeplante Standzeiten des Kraftfahrzeugs.

Aus der DE 10 2004 017 660 A1 ist es bekannt, bei elektrischen und/oder elektromechanischen Systemen eine Beanspruchungsanalyse durchzuführen, indem eine systemspezifische Belastungsgröße erfasst und anhand dieser Belastungsgröße ein Kennwert ermittelt wird, mit dem ein Belastungsgrad eines Bauteils mithilfe modellierter oder empirisch gefundener Schadenskurven bestimmbar ist.

Auch die US 7,474,989 B1 offenbart ein Verfahren, bei dem ein Lebensdauermodell mithilfe der Messungen an einem Opfersensor aktualisiert wird.

Die DE 10 2009 046 394 A1 offenbart ein Verfahren zum Betreiben eines Steuergeräts, bei dem ein Betriebsparameter, beispielsweise eine Gesamtanzahl der Betriebsstunden, ermittelt wird, der eine Information über die Abnutzung, die Alterung und/oder den Verschleiß des Steuergeräts liefert.

Aus der DE 10 2008 019 463 A1 ist ein Verfahren zum Vorhersagen von Ausfallereignissen für eine Komponente eines Kraftfahrzeugs bekannt, bei dem Lastdaten der Komponente erfasst und an eine außerhalb des Fahrzeugs angeordnete Diagnoseeinrichtung übermittelt werden.

Es ist eine Aufgabe der vorliegenden Offenbarung, ein Verfahren zur Überwachung eines elektronischen Steuergeräts und ein Steuergerät anzugeben, mit welchen ein besonders geringes Risiko für einen unvorhergesehenen Ausfall des Steuergeräts erzielbar ist. Dabei soll dieses Ziel insbesondere mit geringen Kosten erreicht werden.

Diese Aufgabe wird durch ein Verfahren zur Überwachung eines elektronischen Steuergeräts, durch eine Vorrichtung zur Durchführung des Verfahrens und durch ein Steuergerät gemäß den unabhängigen Patentansprüchen gelöst. Vorteilhafte Ausgestaltungen und Weiterbildungen des Verfahrens und des Steuergeräts ergeben sich aus den jeweils abhängigen Ansprüchen, der folgenden Beschreibung und den Zeichnungen.

Gemäß einem ersten Aspekt wird ein Verfahren zur Überwachung eines elektronischen Steuergeräts für ein Kraftfahrzeug angegeben. Gemäß einem weiteren Aspekt wird eine Vorrichtung zur Durchführung des Verfahrens angegeben. Gemäß einem dritten Aspekt wird ein Steuergerät für ein Kraftfahrzeug angegeben. Das Steuergerät stellt vorzugsweise die Vorrichtung zur Durchführung des Verfahrens dar. Sofern nachfolgend einzelne Merkmale nur anhand eines Aspekts - z.B. des Verfahrens oder des Steuergeräts bzw. der Vorrichtung - beschrieben sind ist dies nicht einschränkend auszulegen. Vielmehr sind die jeweiligen Merkmale auch für die anderen Aspekte vorgesehen, für die sie nicht explizit offenbart sind.

Gemäß einem Schritt des Verfahrens wird das elektronische Steuergerät bereitgestellt. Das Steuergerät weist einen Steuerschaltkreis auf. Der Steuerschaltkreis ist dazu ausgebildet, eine Betriebsfunktion des Kraftfahrzeugs zu steuern. Im vorliegenden Zusammenhang werden darunter auch Schaltkreise verstanden, die dazu ausgebildet sind, eine Betriebsfunktion des Kraftfahrzeugs zu regeln. Bei der gesteuerten bzw. geregelten Betriebsfunktion des Kraftfahrzeugs kann es sich beispielsweise um die Einspritzung von Kraftstoff in einen Verbrennungsmotor des Kraftfahrzeugs, um die Luftzufuhr zum Verbrennungsmotor und/oder die Einspritzung eines Reduktionsmittels in den Abgastrakt handeln. Der Schaltkreis kann auch dazu vorgesehen sein, die Bremskraft zu regeln, ein Getriebe des Kraftfahrzeugs zu steuern, die Lenkung zu unterstützen, usw.

Zudem hat das Steuergerät einen Überwachungsschaltkreis. Der Überwachungsschaltkreis enthält mindestens ein Sensorbauteil.

Die Vorrichtung zur Durchführung des Verfahrens enthält zweckmäßigerweise den Steuerschaltkreis, den Überwachungsschaltkreis und das mindestens eine Sensorbauteil.

Gemäß einem weiteren Schritt des Verfahrens wird ein Messwert mittels des mindestens einen Sensorbauteils erfasst. Das Erfassen des Messwerts erfolgt in Abhängigkeit von der Art des Sensorbauteils beispielsweise mittels Messung des Widerstands und/oder der Induktivität und/oder der Kapazität des Sensorbauteils oder mittels Auslesen des Sensorbauteils gemäß einem vorgegebenen Kommunikationsprotokoll.

Gemäß einem weiteren Verfahrensschritt wird mittels des Überwachungsschaltkreises anhand des erfassten Messwerts ein Istwert einer Kenngröße ermittelt. Die Kenngröße ist insbesondere von einer rein zeitlichen Kenngröße - wie z.B. der Betriebszeit oder dem Alter des Steuergeräts - verschieden und vorzugsweise abhängig von den Umgebungsbedingungen, denen das Steuergerät ausgesetzt ist. Bei der Kenngröße handelt es sich insbesondere um eine für die thermische, mechanische und/oder chemische Beanspruchung des Steuergeräts repräsentative Kenngröße.

Der Istwert wird mittels des Überwachungsschaltkreises mit einem vorgegebenen Sollwert der Kenngröße verglichen. Der Sollwert ist vorzugsweise derart gewählt, dass bei Erreichen einer thermischen, mechanischen und/oder chemischen Beanspruchung, die dem Sollwert der Kenngröße entspricht, das Steuergerät mit einer Wahrscheinlichkeit von 30 % oder mehr, vorzugsweise von 50 % oder mehr, noch 150 Betriebsstunden oder länger, z.B. noch einen Monat oder länger, zur Steuerung der Betriebsfunktion des Kraftfahrzeugs mittels des Steuerschaltkreises funktionsfähig ist. Anders ausgedrückt gilt für die Überlebensfunktion R(t) des Steuergeräts bei Erreichen des Sollwerts R(150h) > 30%, vorzugsweise R(150h) > 50%; insbesondere gilt R(1 Monat) > 30%, bevorzugt R(1 Monat) > 50%.

Gemäß einem weiteren Verfahrensschritt wird mittels des Überwachungsschaltkreises in Abhängigkeit von dem Ergebnis des Vergleichs ein Signal ausgegeben. Insbesondere wird das Signal ausgegeben, wenn der Istwert den Sollwerten Richtung einer höheren thermischen, mechanischen bzw. chemischen Beanspruchung des Steuergeräts überschreitet bzw. unterschreitet.

Auf diese Weise ist mit Vorteil die Gefahr für einen unvorhergesehenen Ausfalls des Steuergerätes besonders gering. Im Gegensatz beispielsweise zu einem Betriebsstundenzähler wird die tatsächliche Belastung des einzelnen Steuergeräts - die sich z.B. aufgrund unterschiedlichen Nutzungsverhaltens von der Belastung anderer, baugleicher Steuergeräte unterscheiden kann - für die Überwachung des Steuergeräts herangezogen.

Der Anwender hat mit Vorteil genügend Zeit, auf das Signal zu reagieren um beispielsweise das Gerät auszutauschen, bevor ein Funktionsverlust entsteht. Eine besonders aufwändige und kostenintensive Auslegung des Steuergeräts auf eine besonders starke thermische, mechanische und/oder chemische Belastung kann aufgrund der Überwachung des Zustands des Steuergeräts mittels des Überwachungsschaltkreises vermeidbar sein.

Die mittels des Überwachungsschaltkreises gemessene thermische, mechanische und/oder chemische Belastung kann zudem auch für die Planung der Wartungsintervalle anderer Fahrzeugbestandteile verwendet werden. Beispielsweise kommen hierfür weitere Steuergeräte oder mechanischen Baugruppen in Frage, die in gleicher Weise den detektierten Belastungen ausgesetzt sind und gegenüber diesen empfindlich sind.

Insbesondere in Fällen, in denen die Ziellebensdauer des Kraftfahrzeugs technologische Grenzen für die Lebensdauer einzelner Bauelemente des Steuergeräts übersteigt, ist eine besonders zuverlässige und günstige Funktion des Kraftfahrzeugs über die gesamte Lebensdauer erzielbar. Beispielsweise kann die Wartung des Steuergeräts besonders kostengünstig sein, da der Zeitpunkt für einen eventuell erforderlichen Austausch nicht anhand von zeitbezogenen Wartungsintervallen bestimmt werden muss, sondern anhand der tatsächlichen Beanspruchung des Steuergeräts ermittelt werden kann. So kann insbesondere das Wartungsintervall bis zum Austausch des Steuergeräts verlängert sein. Auf diese Weise kann beispielsweise mit Kostenvorteil für Pkw entwickelte Serientechnologie für Lkw eingesetzt werden, obwohl dort die Anforderungen an die Lebensdauer und die Beanspruchung des Steuergeräts größer sind.

Bei einer Ausführungsform hat das Verfahren die zusätzlichen Schritte:
- Speichern des Istwerts,
- Erfassen eines weiteren Messwerts mittels des mindestens einen Sensorbauteils nachfolgend auf den Vergleich des Istwerts mit dem Sollwert,
- Ermitteln eines neuen Istwerts der Kenngröße mittels des Überwachungsschaltkreises anhand des erfassten weiteren Messwerts und des gespeicherten Istwerts und Vergleichen des neuen Istwerts mit dem Sollwert,
- Ausgeben eines weiteren Signals mittels des Überwachungsschaltkreises in Abhängigkeit von dem Ergebnis des Vergleichs des neuen Istwerts mit dem Sollwert.

Auf diese Weise kann die Berechnung des neuen Istwerts vergangene Zustände des Steuergeräts für die Überwachung berücksichtigen. In der Kenngröße sind so beispielsweise die akkumulierte Schwefelexposition, die Anzahl von Temperaturzyklen, usw. einfach auswertbar.

Bei einer anderen Ausführungsform des Verfahrens ist die Kenngröße repräsentativ für die thermische, mechanische und/oder chemische Beanspruchung des mindestens einen Sensorbauteils. Dabei wird unter der Beanspruchung des mindestens einen Sensorbauteils auch die Beanspruchung seiner Befestigung in dem Steuergerät verstanden. Ein Beispiel hierfür ist die Alterung von Lötstellen, an denen das Sensorbauteil zum Beispiel an einer Leiterplatte des Steuergeräts befestigt ist. Auf diese Weise kann die Ausfallwahrscheinlichkeit des Steuergeräts besonders genau bestimmbar sein, beispielsweise da eine Modellierung des Alterungsverhaltens der Bauteile unterbleiben kann.

Bei einer Ausführungsform enthält der Steuerschaltkreis mindestens ein elektrisches oder elektronisches Bauteil, das vom gleichen Typ ist wie das mindestens eine Sensorbauteil und das gegenüber der thermischen, mechanischen und/oder chemischen Beanspruchung unempfindlicher ist als das mindestens eine Sensorbauteil. Mit anderen Worten ist als Sensorbauteil ein elektrisches oder elektronisches Bauelement eingesetzt, das bauart-gleich zu einem Bauteil des Steuerschaltkreises ist, und das bei gleicher thermische, mechanische bzw. chemische Beanspruchung eine höhere Ausfallwahrscheinlichkeit hat als das Bauteil des Steuerschaltkreises. Auf diese Weise kann eine besonders hohe Zuverlässigkeit der Überwachung erzielbar sein.

Insbesondere handelt es sich bei dem Sensorbauteil und dem korrespondierenden Bauteil des Steuerschaltkreises in diesem Fall vorzugsweise um Standardbauteile wie Widerstände, Spulen, Kondensatoren oder Dioden. Derartige Bauelemente häufig günstiger als die weiter oben genannten Präzisionssensoren.

Mit Kostenvorteil wird bei dieser Ausführungsform keine Software zur Berechnung des Lebensdauermodells benötigt, dieses muss nicht aufwändig kalibriert werden und sekundäre Parameter (beispielsweise der exakte Temperaturverlauf, Feuchtigkeit, usw.) müssen nicht separat im Lebensdauermodell verrechnet werden. Ein bekannter, zum Beispiel geometrisch begründeter, Unterschied der Lebensdauer der beiden Bauelemente kann mit Vorteil genügen. Zudem berücksichtigt die Bestimmung des aktuellen Zustands des Sensorbauteils auf einfache Weise auch die Beanspruchung des Steuergeräts in der Vergangenheit. Die Überwachung erstreckt sich dabei auch auf Zeiträume, in denen das Steuergerät - beispielsweise im stromlosen Zustand - nicht in Betrieb ist.

Bei einer ersten erfindungsgemäßen Ausführungsform ist der Überwachungsschaltkreis von dem Steuerschaltkreis verschieden. Das bedeutet insbesondere, dass der Überwachungsschaltkreis nicht zur Steuerung bzw. Regelung einer Betriebsfunktion des Kraftfahrzeugs beiträgt. Vielmehr ist der Überwachungsschaltkreis bei dieser Ausführungsform - vorzugsweise ausschließlich - dazu vorgesehen, einen Zustand des Steuergeräts zu überwachen. Dies schließt nicht aus, dass das Steuergerät eine integrierte Schaltung - beispielsweise einen Mikrocontroller - enthält, der sowohl vom Steuerschaltkreis wie auch vom Überwachungsschaltkreis umfasst ist. Der Steuerschaltkreis und der Überwachungsschaltkreis sind bei dieser Ausführungsform jedoch derart voneinander getrennt, dass der Ausfall von Bauteilen des Überwachungsschaltkreises - bzw. insbesondere der Ausfall des mindestens einen Sensorbauteils - die Funktionsfähigkeit des Steuerschaltkreises nicht beeinträchtigt.

Bei einer zweiten erfindungsgemäßen Ausführungsform enthält der Steuerschaltkreis eine Mehrzahl gleichartiger elektrischer oder elektronischer Bauteile, die gemeinsam zur Steuerung der Betriebsfunktion des Kraftfahrzeugs beitragen. Die gleichartigen Bauteile sind derart miteinander verschaltet, dass der Ausfall eines einzelnen der gleichartigen Bauteile die Funktionsfähigkeit des Steuerschaltkreises zur Steuerung der Betriebsfunktion nicht beeinträchtigt. Beispielsweise handelt es sich bei den gleichartigen Bauteilen um eine Vielzahl von parallel geschalteten Widerständen. Die gleichartigen Bauteile können bei dieser Ausführungsform die Sensorbauteile darstellen. Zweckmäßigerweise kann dann zur Ermittlung des Istwerts der Ausfall eines einzelnen oder einer Teilmenge der gleichartigen Bauteile detektiert wird. Die Teilmenge entspricht dabei einer Anzahl der gleichartigen Bauelemente, deren Ausfall die Funktionsfähigkeit des Steuerschaltkreises zur Steuerung der Betriebsfunktion nicht beeinträchtigt. Beispielsweise kann mittels des Überwachungsschaltkreises der Gesamtwiderstand der parallel geschalteten Widerstände als Messwert erfasst werden.

Diese Ausführungsform macht sich die Idee zunutze, dass bei einer Mehrzahl gleichartiger Bauteile nicht alle der Bauteile bei der gleichen Beanspruchung ausfallen. Durch die Überwachung des Ausfalls einzelner Bauteile kann eine erhöhte Gefahr für einen Funktionsausfall des Steuerschaltkreises bereits erkannt werden, bevor tatsächlich so viele Bauteile ausfallen, dass der Funktionsausfall eintritt. Die Gefahr für einen unvorhergesehenen Ausfall des Steuergeräts ist so besonders gering. Zugleich kann mit Kostenvorteil auf spezielle Sensorbauteile, die nicht zum Steuerschaltkreis gehören, verzichtet werden.

Bei einer zweckmäßigen Ausführungsform des Verfahrens erfolgt das Ausgeben des Signals während des Betriebs des Steuergeräts zur Steuerung der Betriebsfunktion des Kraftfahrzeugs mittels des Steuerschaltkreises. Im vorliegenden Zusammenhang wird unter "Betrieb des Steuergeräts zur Steuerung der Betriebsfunktion des Kraftfahrzeugs" auch eine Startphase - beispielsweise beim Einschalten der Zündung des Kraftfahrzeugs - verstanden, in der das Steuergerät beispielsweise einen Selbsttest ausführt. Auf diese Weise ist die Überwachung des Steuergeräts besonders einfach in den Selbsttest des Fahrzeugs beim Einschalten der Zündung integrierbar.

Bei einer Ausführungsform des Verfahrens ist das ausgegebene Signal ein Warnsignal. Das Signal kann zweckmäßig mittels eines akustischen und/oder optischen Anzeigeelements dargestellt werden. Das Anzeigeelement ist beispielsweise eine Kontrollleuchte oder ein Tongeber. Alternativ oder zusätzlich kann das Signal oder ein zu dem Signal korrespondierender Wert in einem Fehlerspeicher des Kraftfahrzeugs abgelegt werden. Eine derartige Verarbeitung des Signals ist für die Fehlerdiagnose besonders vorteilhaft.

Bei einer Ausführungsform des Verfahrens werden mehrere verschiedene Sollwerte vorgegeben, die verschieden großen Ausfallwahrscheinlichkeiten des Steuergeräts entsprechen, beispielsweise ein erster Sollwert, ein zweiter Sollwert und ein dritter Sollwert, wobei der zweite Sollwerte einer höheren Ausfallwahrscheinlichkeit entspricht als der erste Sollwert und der dritte Sollwerte einer höheren Ausfallwahrscheinlichkeit entspricht als der zweite Sollwert.

Beispielsweise bei dieser Ausführungsform kann bei Überschreiten des ersten Sollwerts ein erstes Signal ausgegeben werden, das beispielsweise in einem Fehlerspeicher des Kraftfahrzeugs abgelegt wird. Das erste Signal ist auf diese Weise insbesondere nur beim Auslesen des Fehlerspeichers sichtbar. Bei Überschreiten des zweiten Sollwerts wird beispielsweise ein zweites Signal ausgegeben, das in dem Fehlerspeicher des Kraftfahrzeugs abgelegt wird und das mittels des Anzeigeelements signalisiert wird. Auf diese Weise ist beispielsweise die Notwendigkeit eines außerplanmäßigen Austauschs des Steuergeräts signalisierbar.

Bei Überschreiten des dritten Sollwerts gibt der Überwachungsschaltkreis beispielsweise ein drittes Signal aus, welches das Steuergerät dazu veranlasst, in einen Notlaufmodus zu wechseln. Auf diese Weise kann das Risiko für unkontrollierte Zustände verringert werden, wenn Bauelemente des Steuerschaltkreises bereits ernsthaft ausfallgefährdet sind. Mit Vorteil ist noch die volle Funktionsfähigkeit aller Bauelemente gewährleistet, wenn das Steuergerät in den Notlaufmodus wechselt. Vorteilhafterweise muss nicht auf den Ausfall eines Bauelements des Steuerschaltkreises reagiert werden.

Bei einer Ausführungsform hat das elektronische Steuergerät den Steuerschaltkreis, der dazu ausgebildet ist eine Betriebsfunktion des Kraftfahrzeugs zu steuern, und den Überwachungsschaltkreis, der das mindestens eine Sensorbauteil enthält. Dabei ist das Steuergerät insbesondere mittels des Überwachungsschaltkreises dazu ausgebildet, einen Messwert mittels des mindestens einen Sensorbauteils zu erfassen, anhand des erfassten Messwerts einen Istwert einer für die thermische, mechanische und/oder chemische Beanspruchung des Steuergeräts repräsentativen Kenngröße zu ermitteln, den Istwert mit einem vorgegebenen Sollwert der Kenngröße zu vergleichen, und in Abhängigkeit vom Ergebnis des Vergleichs ein Signal auszugeben.

Bei einer Ausführungsform ist die Kenngröße repräsentativ für die thermische, mechanische und/oder chemische Beanspruchung des mindestens einen Sensorbauteils und der Steuerschaltkreis weist ein elektrisches oder elektronisches Bauteil auf, das vom gleichen Typ ist wie das Sensorbauteil und das gegenüber der thermischen, mechanischen und/oder chemischen Beanspruchung unempfindlicher ist als das jeweilige Sensorbauteil. Im Fall von mehreren Sensorbauteilen weist der Steuerschaltkreis vorzugsweise für jedes Sensorbauteil ein elektrisches oder elektronisches Bauteil auf, das vom gleichen Typ ist wie das jeweilige Sensorbauteil und das gegenüber der thermischen, mechanischen und/oder chemischen Beanspruchung unempfindlieher ist als das jeweilige Sensorbauteil. Beispielsweise bei dieser Ausführungsform ist der Überwachungsschaltkreis vorzugsweise vom Steuerschaltkreis verschieden.

Bei einer Ausführungsform enthält der Überwachungsschaltkreis mehrere verschiedenartige Sensorbauteile und/oder mehrere Sensorbauteile mit unterschiedlicher Empfindlichkeit. Alternativ oder zusätzlich ist auch denkbar, dass der Überwachungsschaltkreis mehrere baugleiche Sensorbauteile enthält. Auf diese Weise sind verschiedene Kenngrößen überwachbar und/oder die Alterung verschiedener Bauteile des Steuerschaltkreises ist überwachbar und/oder verschieden große Ausfallwahrscheinlichkeiten sind unterscheidbar. So ist kann ein besonders geringes Risiko für einen unvorhergesehenen Ausfall des Steuergeräts erzielt sein.

Die Sensorbauteile sind bei einer Weiterbildung in dem Überwachungsschaltkreis insbesondere seriell geschaltet. So ist beispielsweise mittels einer Messung der Zustand aller Sensorbauteile zugleich überwachbar. Alternativ können die Sensorbauteile auch parallel geschaltet sein. Auch in diesem Fall ist - beispielsweise anhand des elektrischen Widerstands - der Ausfall von einem oder mehreren der Sensorbauteile messbar. Als weitere Alternative ist auch denkbar, dass die Sensorbauteile einzeln an einen Mikrocontroller angeschlossen sind. Auf diese Weise sind sie mit Vorteil einzeln überwachbar.

Bei einer Ausführungsform des Steuergeräts es ist das Sensorbauteil oder eines der Sensorbauteile ein - insbesondere keramischer - Widerstand, der eine größere Masse und ein größeres Volumen hat als das korrespondierende Bauteil des Steuerschaltkreises. Auf diese Weise ist beispielsweise eine Alterung bzw. ein Versagen von Lotstellen, mit denen der Widerstand befestigt ist, messbar. Dies kann beispielsweise durch thermisches Zykeln und/oder durch mechanische Vibrationen ausgelöst sein.

Bei einer anderen Ausführungsform ist das Sensorbauteil oder eines der Sensorbauteile ein Widerstand, dessen - insbesondere freiliegende - Metalloberfläche größer ist als diejenige des jeweiligen Bauteils des Steuerschaltkreises. Das Sensorbauteil ist dabei insbesondere ein Widerstandsarray und während das korrespondierende Bauteil des Steuerschaltkreises insbesondere ein Einzelwiderstand ist. Die Metalloberfläche ist insbesondere eine Silberoberfläche. Auf diese Weise ist die Alterung durch Schwefelexposition überwachbar. Das Sensorbauteil kann bei einer Weiterbildung alternativ oder zusätzlich mit feinen - insbesondere freiliegenden - Metallstrukturen versehen sein, die gezielt für eine Korrosion bei Schwefelexposition ausgebildet sind.

Bei einer weiteren Ausführungsform ist das Sensorbauteil bzw. eines der Sensorbauteile eine Spule. Die Spule ist insbesondere mechanisch schwächer ausgelegt als die Spule(n) im Steuerschaltkreis, welche das/die korrespondierende(n) Bauteil(e) darstellt/darstellen. Spulenbauteile können besonders anfällig für Vibrationsermüdung sein.

Bei einer weiteren Ausführungsform ist das Sensorbauteil bzw. eines der Sensorbauteile ein Elektrolytkondensator. In diesem Fall wird vorzugsweise die Kapazität des Elektrolytkondensators als Messwert gemessen. Die tatsächliche Kapazität ist besonders geeignet, um thermische Alterung des Elektrolytkondensators zu der detektieren.

Bei einer weiteren Ausführungsform ist das Sensorbauteil bzw. eines der Sensorbauteile eine Diode. Beispielsweise kann es sich um eine Diode eines ASIC des Steuergeräts handeln, die mit einer Diffusionssperre ausgebildet ist, welche gegenüber der Diffusionssperre des korrespondierenden Bauteils des Steuerschaltkreises verringert ist oder die mit fehlender Diffusionssperre ausgebildet ist. Die Diode ist beispielsweise eine überkritische Diode. Auf diese Weise ist thermische Alterung, insbesondere thermisch getriebenen Diffusion - insbesondere im Halbleitermaterial - einfach überwachbar.

Bei einer Weiterbildung misst der Überwachungsschaltkreis, insbesondere mittels eines Mikrocontrollers, den Durchgangswiderstand einer Serienschaltung eines Keramikwiderstands, eines Widerstands-Arrays und einer Spule. Ein Warnsignal wird insbesondere dann ausgegeben, wenn der Durchgangswiderstand einen vorgegebenen Widerstands-Sollwert überschreitet.

Bei einer anderen Ausführungsform enthält der Steuerschaltkreis eine Mehrzahl gleichartiger elektrischer oder elektronischer Bauteile. Die gleichartigen Bauteile sind derart miteinander verschaltet, dass sie gemeinsam zur Steuerung der Betriebsfunktion des Kraftfahrzeugs beitragen. Zudem sind sie derart miteinander verschaltet, dass der Ausfall eines einzelnen der gleichartigen Bauteile die Funktionsfähigkeit des Steuerschaltkreises (CC) zur Steuerung der Betriebsfunktion nicht beeinträchtigt, z.B. handelt es sich um eine Vielzahl von parallel geschalteten Widerständen.

Die gleichartigen Bauteile können bei dieser Ausführungsform zweckmäßig die Sensorbauteile darstellen. Der Überwachungsschaltkreis ist dazu ausgebildet, zur Ermittlung des Istwerts den Ausfall eines einzelnen oder einer Teilmenge der gleichartigen Bauteile zu detektieren.

Die Kenngröße ist so insbesondere nicht nur repräsentativ für die thermische, mechanische und/oder chemische Beanspruchung der Sensorbauteile sondern in identischer Weise für die thermische, mechanische und/oder chemische Beanspruchung der zur Steuerung der Betriebsfunktion des Kraftfahrzeugs beitragenden, gleichartigen Bauteile. Da die Sensorbauteile auf diese Weise der identischen Belastung durch den Betrieb des Steuergeräts ausgesetzt sind wie die Bauteile des Steuerschaltkreises und auch baulich identisch sind, ist eine besonders gute Vorhersage der Ausfallwahrscheinlichkeit des Steuergerätes erzielbar.

Bei einer zweckmäßigen Ausführungsform des Steuergeräts sind der Steuerschaltkreis, der Überwachungsschaltkreis und das mindestens eine Sensorbauteil gemeinsam in einem Gehäuse des Steuergeräts angeordnet. Das Gehäuse ist beispielsweise gegen das Eindringen von Feuchtigkeit abgedichtet. Durch die Anordnung der Sensorbauteile und des Überwachungsschaltkreises im gleichen Gehäuse mit dem Steuerschaltkreis ist die thermische, mechanische und/oder chemische Belastung des Steuerschaltkreises besonders genau überwachbar. Insbesondere haben die Sensorbauteile und der Steuerschaltkreis in dem gemeinsamen Gehäuse die gleichen Umgebungsbedingungen wie Temperatur, Vibrationen oder Schwefelkonzentration wie der Steuerschaltkreis.

Weitere Vorteile und vorteilhafte Ausgestaltungen und Weiterbildungen des Verfahrens, der Vorrichtung und des Steuergeräts ergeben sich aus den folgenden, in Zusammenhang mit den Figuren dargestellten Ausführungsbeispielen.

Es zeigen:
- Figur 1: eine schematische Schnittdarstellung eines ersten Steuergerätes, das nicht zur Erfindung gehört, jedoch grundlegende Eigenschaften der Erfindung verdeutlicht,
- Figur 2: ein stark schematisiertes Schaltbild eines zweiten Steuergeräts, das nicht zur Erfindung gehört, jedoch grundlegende Eigenschaften der Erfindung verdeutlicht,
- Figur 3: ein stark schematisiertes Schaltbild eines dritten Steuergeräts gemäß einem zur Erfindung gehörenden Ausführungsbeispiel und
- Figur 4: ein stark schematisiertes Schaltbild eines vierten Steuergeräts gemäß einem weiteren zur Erfindung gehörenden Ausführungsbeispiel.

Gleiche, gleichartige oder gleich wirkende Elemente sind in den Figuren mit den gleichen Bezugszeichen versehen. In manchen Figuren können einzelne Bezugszeichen und Elemente zur Verbesserung der Übersichtlichkeit weggelassen sein. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder für eine bessere Verständlichkeit übertrieben groß dargestellt sein.

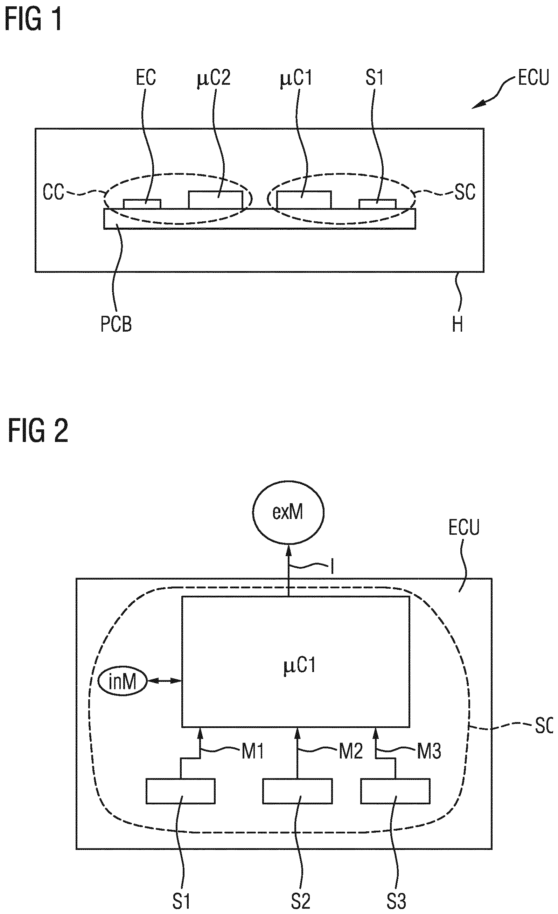

Figur 1 zeigt ein erstes Steuergerät ECU in einer stark schematisierten Schnittdarstellung.

Das Steuergerät ECU hat ein Gehäuse H, in dem eine Leiterplatte PCB angeordnet ist. Mittels Leiterbahnen auf der Leiterplatte PCB sowie weiteren Bauelementen sind ein Steuerschaltkreis CC und ein Überwachungsschaltkreis SC gebildet, die voneinander verschieden sind. Vorliegend enthält der Steuerschaltkreis CC ein elektrisches bzw. elektronisches Bauelement EC und einen Mikrocontroller µC2. Der Überwachungsschaltkreis SC enthält einen weiteren Mikrocontroller µC1 sowie ein Sensorbauteil S1. Das Sensorbauteil S1 trägt während des Normalbetriebs des Steuergeräts nicht zur Steuerung einer Betriebsfunktion des Fahrzeugs bei. Der Steuerschaltkreis CC mit dem Bauelements EC und dem Mikrocontroller µC1, der Überwachungsschaltkreis SC mit dem Sensorbauteil S1 und dem Mikrocontroller µC2 sowie die Leiterplatte PCB sind in dem gemeinsamen Gehäuse H angeordnet. Die Funktionen der beiden Mikrocontroller µC1 und µC2 können auch in einem einzigen Mikrocontroller realisiert sein. Bei einer Ausgestaltung ist das Sensorbauteil S1 ein Schwefelsensor.

Bei einem Verfahren zur Überwachung des elektronischen Steuergeräts ECU wird mittels des Sensorbauteils S1 ein Messwert M1 für die Schwefelkonzentration erfasst. Der erfasste Messwert M1 wird mittels des Überwachungsschaltkreises SC mit einem Wert verrechnet, der sich aus früheren Messungen der Schwefelkonzentration mittels des Sensorbauteils S1 ergibt, und der insbesondere aus einem internen Speicher inM des Mikrocontrollers µC1 ausgelesen wird. Auf diese Weise wird ein Istwert für die Schwefelexposition des Steuergeräts ECU ermittelt. Die Schwefelexposition ist eine für eine chemische Belastung des Steuergeräts ECU repräsentative Kenngröße.

Der ermittelte Istwert wird mit einem vorgegebenen und insbesondere aus dem Speicher inM ausgelesenen Sollwert verglichen. Wenn der Istwert den Sollwert überschreitet wird mittels des Überwachungsschaltkreises SC ein Signal I ausgegeben und aus dem Steuergeräts ECU an eine andere Komponente der Fahrzeugelektronik übermittelt.

Die Ermittlung der Schwefelexposition ist dabei nicht einschränkend zu verstehen. Es können auch andere Kenngrößen und dazu korrespondierende Sensorbauteile S1 - insbesondere wie im allgemeinen Teil vorstehend beschrieben - verwendet sein, die dann beispielsweise eine mechanische oder thermische Belastung des Steuergeräts ECU überwachen.

Figur 2 zeigt ein stark vereinfachtes Schaltbild eines zweiten Steuergeräts ECU. Das zweite Steuergerät ECU entspricht im Wesentlichen dem ersten Steuergerät. In dem Schaltbild sind zur Vereinfachung der Steuerschaltkreis CC und seine Bestandteile weggelassen.

Im Gegensatz zum ersten Steuergerät enthält der Überwachungsschaltkreis SC des zweiten Steuergeräts ECU mehrere Sensorbauteile S1, S2, S3. Mittels des Mikrocontrollers µC1 werden Messwerte M1, M2, M3 der Sensorbauteile S1, S2, S3 von dem Überwachungsschaltkreis SC erfasst und zur Ermittlung des Istwerts einer Kenngröße oder alternativ zur Ermittlung von Istwerten mehrerer Kenngrößen herangezogen.

Die Istwerte werden oder dazu korrespondierende Werte werden in einem internen Speicher inM des Steuergeräts ECU gespeichert und bei der Ermittlung der Istwerte nachfolgender Messungen ausgelesen und berücksichtigt. Der interne Speicher inM kann in dem Mikrocontroller µC1 integriert oder als zusätzliches Bauteil ausgebildet sein.

Das in Abhängigkeit vom Vergleichsergebnis des Istwerts bzw. der Istwerte mit einem Sollwert bzw. entsprechenden Sollwerten der Kenngröße(n) ausgegebene Signal I wird mittels einer Signalleitung aus dem Steuergerät der ECU an eine andere Komponente der Fahrzeugelektronik weitergeleitet und ein zu dem Signal korrespondierender Wert wird in einem Fehlerspeicher exM abgelegt. Beispielsweise in Abhängigkeit von den Istwerten der verschiedenen Sensorbauteile S1, S2, S3 kann der Überwachungsschaltkreis SC dazu ausgebildet sein, verschiedene Signale I auszugeben, die verschieden starken thermischen, mechanischen und/oder chemischen Beanspruchungen Steuergeräts ECU entsprechen.

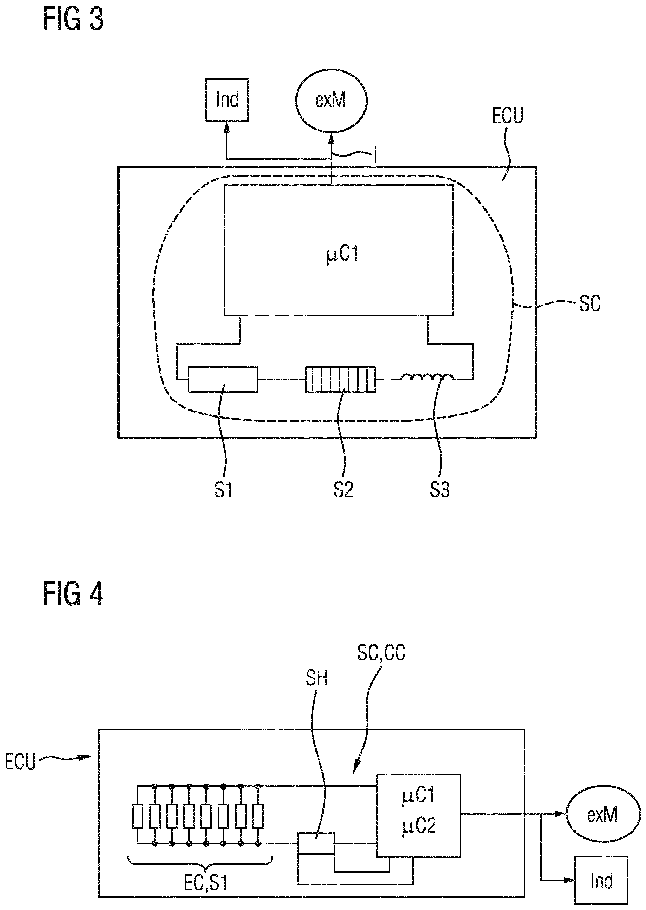

Figur 3 zeigt einen stark schematisierten Schaltkreis eines dritten Steuergeräts ECU gemäß einem Ausführungsbeispiel. Das dritte Steuergerät ECU entspricht im Wesentlichen dem zweiten Steuergerät.

Im Unterschied dazu wird das Signal I - bzw. ein dazu korrespondierender Wert - jedoch nicht nur in einem Speicher exM abgelegt, sondern es kann zusätzlich mittels eines Anzeigeelements Ind akustisch und/oder optisch signalisiert werden. Das Anzeigeelement Ind ist beispielsweise Bestandteil einer Anzeigetafel - etwa eines sogenannten Kombi-Instruments -, die dazu ausgebildet ist, den Fahrer des Kraftfahrzeugs über den Zustand des Fahrzeugs zu informieren. Eine Ausführungsform des Verfahrens zur Überwachung des Steuergeräts ECU, bei dem das Signal I über ein solches Anzeigeelement Ind angezeigt wird, ist auch für andere Steuergeräte ECU, insbesondere wie sie in Zusammenhang mit den Figuren 1 und 2 beschrieben sind, verwendbar und vorteilhaft.

Zusätzlich unterscheidet sich das dritte Steuergerät ECU dadurch von dem zweiten Steuergerät, dass als Sensorbauteile S1, S2, S3 keine Sensoren verwendet sind, die zur Erfassung von Umwelteinflüssen spezifiziert sind - wie beispielsweise Temperatursensoren, Vibrationssensor, Feuchtigkeitssensoren und dergleichen - sondern elektrische oder elektronische Standardbauteile wie Widerstände, Spulen, Kondensatoren oder Dioden. Die Messung einer für die thermische, mechanische oder chemische Belastung des Steuergeräts ECU repräsentativen Kenngröße erfolgt bei dem vorliegenden Ausführungsbeispiel insbesondere über die Messung einer Abweichung eines für das jeweilige Sensorbauteil S1, S2, S3 bauart-typischen Kennwerts - insbesondere bei einem Widerstand seines ohmschen Widerstands, bei einer Spule ihres Widerstands und/oder ihrer Induktivität und bei einem Kondensator seiner Kapazität. Auf diese Weise ist die gemessene Kenngröße insbesondere repräsentativ für die thermische, mechanische und/oder chemische Beanspruchung des jeweiligen Sensorbauteils S1, S2, S3.

Die Sensorbauteile S1, S2, S3 sind insbesondere bauartgleich zu Standardbauteilen wie Widerständen, Spulen, Kondensatoren oder Dioden, die in dem (in Figur 3 wiederum weggelassenen) Steuerschaltkreis CC des Steuergeräts ECU als elektrische oder elektronische Bauteile EC verwendet sind. Jedoch sind die Sensorbauteile S1, S2, S3 so ausgelegt, dass sie für eine thermische, mechanische und/oder chemische Belastung empfindlicher sind als die korrespondierenden Bauteile EC des Steuerschaltkreises CC.

Beispielsweise ist in dem Überwachungsschaltkreis SC ein Keramikwiderstand als erstes Sensorbauteil S1 verwendet, dessen Masse und Volumen größer sind als diejenigen des größten Keramikwiderstands im Steuerschaltkreis CC. Beispielsweise kann als Sensorbauteil S1 ein Keramikwiderstand mit der Baugröße 2510 nach dem EIA Standard verwendet sein, wenn im Steuerschaltkreis CC nur Keramikwiderstände mit einer Baugröße von 1206 oder weniger nach dem EIA Standard eingesetzt sind. Aufgrund seiner größeren Masse und Dimensionen ist das Sensorbauteil S1 dann empfindlicher gegenüber mechanischer und/oder thermischer Beanspruchung als das korrespondierende Bauteil EC des Steuerschaltkreises CC. Beispielsweise ist die Lotstellenalterung des Sensorbauteils S1 gegenüber dem korrespondierenden Bauteil EC beschleunigt.

Als zweites Sensorbauteil S2 kann beispielsweise ein Widerstands-Array mit Silberbeschichtung und feinen Metallstrukturen eingesetzt sein, das auf diese Weise empfindlich gegenüber Schwefelexposition ist. Als korrespondierendes Bauteil EC des Steuerschaltkreises CC sind beispielsweise nur Einzelwiderstände eingesetzt, bei denen weniger Silber dem Schwefel ausgesetzt ist.

Als drittes Sensorbauteil S3 ist beispielsweise eine Spule eingesetzt, die mechanisch schwächer ausgelegt ist als die im Steuerschaltkreis CC als korrespondierende Bauteile EC verwendeten Spulen. Das Sensorbauteil S3 ist damit beispielsweise empfindlicher gegenüber Vibrationsermüdung.

Bei dem vorliegenden Ausführungsbeispiel sind die drei Sensorbauteile S 1,2, S3 elektrisch in Reihe geschaltet und der Überwachungsschaltkreis SC vergleicht zur Erfassung des Messwerts den Durchgangswiderstand diese Reihenschaltung mit einem Sollwiderstand. Weicht der Istwert des Durchgangswiderstands zu weit von dem vorgegebenen Sollwert ab, signalisiert der Überwachungsschaltkreis SC das Ende der technologischen Lebensdauer des Steuergeräts ECU.

Figur 4 zeigt einen stark schematisierten Schaltkreis eines vierten Steuergeräts in ECU gemäß einem weiteren Ausführungsbeispiel. Das Steuergerät ECU dieses Ausführungsbeispiels entspricht grundsätzlich dem ersten Steuergerät.

Jedoch sind als Sensorbauteile S1 eine Vielzahl von gleichartigen und vorliegend auch baugleichen Bauteilen EC des Steuerschaltkreises CC verwendet. Die Sensorbauteil S1 bzw. die gleichartigen Bauteile EC sind somit sowohl Bestandteil des Steuerschaltkreises CC als auch des Überwachungsschaltkreises SC. Steuer- und Überwachungsschaltkreis CC, SC können bei einer Weiterbildung identisch sein. Zudem sind beim vorliegenden Ausführungsbeispiel die Mikrocontroller µC1, µC2 von Steuer- und Überwachungsschaltkreis CC, SC keine räumlich getrennten Bauelemente.

Bei den gleichartigen Bauteilen EC handelt es sich beim vorliegenden Ausführungsbeispiel um baugleiche Widerstände. Die Anzahl der Widerstände ist so gewählt, dass der Ausfall eines einzelnen Widerstands die Funktionsfähigkeit des Steuerschaltkreises CC zur Steuerung der Betriebsfunktion des Kraftfahrzeugs nicht beeinträchtigt.

Das Steuergerät ECU ist mittels des Überwachungsschaltkreises SC jedoch dazu ausgebildet, den Ausfall einzelner Sensorbauteile S1 - d.h. einzelner der gleichartigen Bauteile EC - zu ermitteln. Beispielsweise wird der Widerstand der Parallelschaltung der Widerstände als Istwert ermittelt. Dies kann z.B. unter Zuhilfenahme eines Shunt-Widerstands SH zur Messung des Stromflusses erfolgen.

Der Widerstand wird mit dem Sollwert verglichen, der zweckmäßigerweise dem Widerstand der Parallelschaltung entspricht, wenn alle Bauteile EC funktionsfähig sind. In Abhängigkeit von dem Vergleichsergebnis kann ein Warnsignal ausgegeben werden, wie beispielsweise in Zusammenhang mit dem Ausführungsbeispiel zum dritten Steuergerät vorstehend beschrieben. Dabei können bei einer Weiterbildung verschiedene Warnstufen - entsprechend z.B. den im allgemeinen Teil beschriebenen ersten, zweiten und dritten Signalen - zu unterschiedlichen Anzahlen ausgefallener Widerstände korrespondieren.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Ausführungsbeispielen und Patentansprüchen beinhaltet.

## Patentansprüche

1. Verfahren zur Überwachung eines elektronischen Steuergeräts (ECU) für ein Kraftfahrzeug mit den Schritten:
- Bereitstellen des elektronischen Steuergeräts (ECU), wobei das Steuergerät (ECU) einen Steuerschaltkreis (CC), der dazu ausgebildet ist eine Betriebsfunktion des Kraftfahrzeugs zu steuern, und einen Überwachungsschaltkreis (SC), der mindestens ein Sensorbauteil (S1, S2, S3) enthält, aufweist,
- Erfassen eines Messwerts (M1, M2, M3) mittels des mindestens einen Sensorbauteils (S1, S2, S3),
- Ermitteln eines Istwerts einer für die thermische, mechanische und/oder chemische Beanspruchung des Steuergeräts (ECU) repräsentativen Kenngröße mittels des Überwachungsschaltkreises (SC) anhand des erfassten Messwerts (M1, M2, M3) und Vergleichen des Istwerts mit einem vorgegebenen Sollwert der Kenngröße,
- Ausgeben eines Signals (I) mittels des Überwachungsschaltkreises (SC) in Abhängigkeit von dem Ergebnis des Vergleichs, wobei die Kenngröße repräsentativ für die thermische, mechanische und/oder chemische Beanspruchung des mindestens einen Sensorbauteils (S1, S2, S3) ist,
**dadurch gekennzeichnet, dass**
entweder
der Steuerschaltkreis (CC) von dem Überwachungsschaltkreis (SC) verschieden ist und der Steuerschaltkreis (CC) mindestens ein elektrisches oder elektronisches Bauteil (EC) aufweist, das vom gleichen Typ ist wie das mindestens eine Sensorbauteil (S1, S2, S3) und das gegenüber der thermischen, mechanischen und/oder chemischen Beanspruchung unempfindlicher ist als das mindestens eine Sensorbauteil (S1, S2, S3)
oder
-- der Steuerschaltkreis (CC) eine Mehrzahl gleichartiger elektrischer oder elektronischer Bauteile (EC) enthält, die sowohl Bestandteil des Steuerschaltkreises (CC) als auch des Überwachungsschaltkreises (SC) sind und gemeinsam zur Steuerung der Betriebsfunktion des Kraftfahrzeugs beitragen und derart miteinander verschaltet sind, dass der Ausfall eines einzelnen der gleichartigen Bauteile (EC) die Funktionsfähigkeit des Steuerschaltkreises (CC) zur Steuerung der Betriebsfunktion nicht beeinträchtigt und
-- die gleichartigen Bauteile (EC) die Sensorbauteile (S1, S2, S3) darstellen und zur Ermittlung des Istwerts der Ausfall eines einzelnen oder einer Teilmenge der gleichartigen Bauteile (EC) detektiert wird.

2. Verfahren gemäß Anspruch 1, mit den zusätzlichen Schritten:
- Speichern des Istwerts,
- Erfassen eines weiteren Messwerts (M1, M2, M3) mittels des mindestens einen Sensorbauteils (S1, S2, S3) nachfolgend auf den Vergleich des Istwerts mit dem Sollwert,
- Ermitteln eines neuen Istwerts der Kenngröße mittels des Überwachungsschaltkreises (SC) anhand des erfassten weiteren Messwerts (M1, M2, M3) und des gespeicherten Istwerts und Vergleichen des neuen Istwerts mit dem Sollwert,
- Ausgeben eines weiteren Signals (I) mittels des Überwachungsschaltkreises (SC) in Abhängigkeit von dem Ergebnis des Vergleichs des neuen Istwerts mit dem Sollwert.

3. Verfahren gemäß einem der vorhergehenden Ansprüche, **dadurch gekennzeichnet, dass** das Ausgeben des Signals (I) während des Betriebs des Steuergeräts (ECU) zur Steuerung der Betriebsfunktion des Kraftfahrzeugs mittels des Steuerschaltkreises (CC) erfolgt.

4. Verfahren gemäß einem der vorhergehenden Ansprüche, **dadurch gekennzeichnet, dass** das ausgegebene Signal (I) ein Warnsignal ist und das Signal (I) mittels eines akustischen und/oder optischen Anzeigeelements (Ind) dargestellt wird und/oder in einem Fehlerspeicher (exM) des Kraftfahrzeugs abgelegt wird.

5. Elektronisches Steuergerät (ECU) für ein Kraftfahrzeug mit einem Steuerschaltkreis (CC), der dazu ausgebildet ist eine Betriebsfunktion des Kraftfahrzeugs zu steuern und einem Überwachungsschaltkreis (SC) der mindestens ein Sensorbauteil (S1, S2, S3) enthält,
wobei das Steuergerät (ECU) mittels des Überwachungsschaltkreises (SC) dazu ausgebildet ist,
- einen Messwert (M1, M2, M3) mittels des mindestens einen Sensorbauteils (S1, S2, S3) zu erfassen,
- anhand des erfassten Messwerts (M1, M2, M3) einen Istwert einer für die thermische, mechanische und/oder chemische Beanspruchung des Steuergeräts (ECU) repräsentativen Kenngröße zu ermitteln,
- den Istwert mit einem vorgegebenen Sollwert der Kenngröße zu vergleichen, und
- in Abhängigkeit vom Ergebnis des Vergleichs ein Signal (I) auszugeben, wobei die Kenngröße repräsentativ für die thermische, mechanische und/oder chemische Beanspruchung des mindestens einen Sensorbauteils (S1, S2, S3) ist, **dadurch gekennzeichnet, dass**
- der Steuerschaltkreis (CC) von dem Überwachungsschaltkreis (SC) verschieden ist und ein elektrisches oder elektronisches Bauteil aufweist oder - im Fall von mehreren Sensorbauteilen (S1, S2, S3) - für jedes Sensorbauteil ein elektrisches oder elektronisches Bauteil (EC) aufweist, das vom gleichen Typ ist wie das jeweilige Sensorbauteil (S1, S2, S3) und das gegenüber der thermischen, mechanischen und/oder chemischen Beanspruchung unempfindlicher ist als das jeweilige Sensorbauteil (S1, S2, S3) .

6. Steuergerät (ECU) gemäß dem vorhergehenden Anspruch, **dadurch gekennzeichnet, dass** der Überwachungsschaltkreis (SC) mehrere verschiedenartige Sensorbauteile (S1, S2, S3) enthält, die in dem Überwachungsschaltkreis (SC) insbesondere seriell geschaltet sind.

7. Steuergerät (ECU) gemäß einem der vorhergehenden Ansprüche 6 oder 7, **dadurch gekennzeichnet, dass** das Sensorbauteil (S1, S2, S3) oder die Sensorbauteile (S1, S2, S3) aus der folgenden Gruppe ausgewählt sind:
- ein - insbesondere keramischer - Widerstand, der eine größere Masse hat als das jeweilige Bauteil des Steuerschaltkreises (CC),
- ein Widerstand, dessen freiliegende Metalloberfläche größer ist als diejenige des jeweiligen Bauteils des Steuerschaltkreises (CC), wobei das Sensorbauteil (S1, S2, S3) insbesondere ein Widerstandsarray und das Bauteil des Steuerschaltkreises (CC) insbesondere ein Einzelwiderstand ist,
- eine Spule,
- ein Elektrolytkondensator,
- eine Diode, insbesondere eine mit gegenüber dem jeweiligen Bauteil des Steuerschaltkreises (CC) verringerter oder fehlender Diffusionssperre ausgebildete Diode eines ASIC des Steuergeräts (ECU).

8. Elektronisches Steuergerät (ECU) für ein Kraftfahrzeug mit einem Steuerschaltkreis (CC), der dazu ausgebildet ist eine Betriebsfunktion des Kraftfahrzeugs zu steuern und einen Überwachungsschaltkreis (SC) der mindestens ein Sensorbauteil (S1, S2, S3) enthält,
wobei das Steuergerät (ECU) mittels des Überwachungsschaltkreises (SC) dazu ausgebildet ist,
- einen Messwert (M1, M2, M3) mittels des mindestens einen Sensorbauteils (S1, S2, S3) zu erfassen,
- anhand des erfassten Messwerts (M1, M2, M3) einen Istwert einer für die thermische, mechanische und/oder chemische Beanspruchung des Steuergeräts (ECU) repräsentativen Kenngröße zu ermitteln,
- den Istwert mit einem vorgegebenen Sollwert der Kenngröße zu vergleichen, und
- in Abhängigkeit vom Ergebnis des Vergleichs ein Signal (I) auszugeben,
**dadurch gekennzeichnet, dass**
- der Steuerschaltkreis (CC) eine Mehrzahl gleichartiger elektrischer oder elektronischer Bauteile (EC) enthält, die sowohl Bestandteil des Steuerschaltkreises (CC) als auch des Überwachungsschaltkreises (SC) sind und derart miteinander verschaltet sind, dass sie gemeinsam zur Steuerung der Betriebsfunktion des Kraftfahrzeugs beitragen und dass der Ausfall eines einzelnen der gleichartigen Bauteile (EC) die Funktionsfähigkeit des Steuerschaltkreises (CC) zur Steuerung der Betriebsfunktion nicht beeinträchtigt und
- die gleichartigen Bauteile (EC) die Sensorbauteile (S1, S2, S3) darstellen und der Überwachungsschaltkreises (SC) dazu ausgebildet zur Ermittlung des Istwerts den Ausfall eines einzelnen oder einer Teilmenge der gleichartigen Bauteile (EC) zu detektieren.

9. Steuergerät (ECU) gemäß einem der Ansprüche 5 bis 8, **dadurch gekennzeichnet, dass** der Steuerschaltkreis (CC), der Überwachungsschaltkreis (SC) und das mindestens eine Sensorbauteil (S1, S2, S3) gemeinsam in einem Gehäuse (H) des Steuergeräts (ECU) angeordnet sind.

## Claims

1. Method for monitoring an electronic control unit (ECU) for a motor vehicle, having the steps:
- providing the electronic control unit (ECU), wherein the control unit (ECU) has a control circuit (CC), which is constructed for controlling an operating function of the motor vehicle, and a monitoring circuit (SC), which contains at least one sensor component (S1, S2, S3),
- recording a measured value (M1, M2, M3) by means of the at least one sensor component (S1, S2, S3),
- determining an actual value of a characteristic value representative for the thermal, mechanical and/or chemical loading of the control unit (ECU) by means of the monitoring circuit (SC) on the basis of the recorded measured value (M1, M2, M3) and comparing the actual value with a predetermined set-point value of the characteristic value,
- emitting a signal (I) by means of the monitoring circuit (SC) as a function of the result of the comparison, wherein the characteristic value is representative for the thermal, mechanical and/or chemical loading of the at least one sensor component (S1, S2, S3),
**characterized in that** either
the control circuit (CC) is different from the monitoring circuit (SC), and the control circuit (CC) has at least one electric or electronic component (EC), which is of the same type as the at least one sensor component (S1, S2, S3) and which is less sensitive with respect to the thermal, mechanical and/or chemical loading than the at least one sensor component (S1, S2, S3)
or
- the control circuit (CC) contains a plurality of similar electric or electronic components (EC), which are part both of the control circuit (CC) and of the monitoring circuit (SC) and together contribute to controlling the operating function of the motor vehicle and are connected to one another in such a manner that the failure of an individual component of the similar components (EC) does not impair the functionality of the control circuit (CC) for controlling the operating function, and
- the similar components (EC) constitute the sensor components (S1, S2, S3) and the failure of an individual or a portion of the similar components (EC) is detected for determining the actual value.

2. Method according to Claim 1, with the additional steps:
- saving the actual value,
- recording a further measured value (M1, M2, M3) by means of the at least one sensor component (S1, S2, S3) following the comparison of the actual value with the set-point value,
- determining a new actual value of the characteristic value by means of the monitoring circuit (SC) on the basis of the recorded further measured value (M1, M2, M3) and the saved actual value and comparing the new actual value with the set-point value,
- emitting a further signal (I) by means of the monitoring circuit (SC) as a function of the result of the comparison of the new actual value with the set-point value.

3. Method according to either of the preceding claims, **characterized in that** the signal (I) is emitted during operation of the control unit (ECU) for controlling the operating function of the motor vehicle by means of the control circuit (CC).

4. Method according to one of the preceding claims, **characterized in that** the emitted signal (I) is a warning signal and the signal (I) is represented by means of an acoustic and/or optical indicating element (Ind) and/or is saved in a fault memory (exM) of the motor vehicle.

5. Electronic control unit (ECU) for a motor vehicle having a control circuit (CC), which is constructed for controlling an operating function of the motor vehicle, and a monitoring circuit (SC), which contains at least one sensor component (S1, S2, S3),
wherein the control unit (ECU) is constructed by means of the monitoring circuit (SC) for
- recording a measured value (M1, M2, M3) by means of the at least one sensor component (S1, S2, S3),
- determining an actual value of a characteristic value representative for the thermal, mechanical and/or chemical loading of the control unit (ECU) on the basis of the recorded measured value (M1, M2, M3),
- comparing the actual value with a predetermined set-point value of the characteristic value, and
- emitting a signal (I) as a function of the result of the comparison, wherein the characteristic value is representative for the thermal, mechanical and/or chemical loading of the at least one sensor component (S1, S2, S3), **characterized in that**
- the control circuit (CC) is different from the monitoring circuit (SC) and has an electric or electronic component or - in the case of a plurality of sensor components (S1, S2, S3) - has one electric or electronic component (EC) for each sensor component, which is of the same type as the respective sensor component (S1, S2, S3) and is less sensitive with respect to the thermal, mechanical and/or chemical loading than the respective sensor component (S1, S2, S3) .

6. Control unit (ECU) according to the preceding claim, **characterized in that** the monitoring circuit (SC) contains a plurality of diverse sensor components (S1, S2, S3), which are in particular connected in series in the monitoring circuit (SC).

7. Control unit (ECU) according to either of the preceding Claims 6 and 7, **characterized in that** the sensor component (S1, S2, S3) or the sensor components (S1, S2, S3) are selected from the following group:
- an - in particular ceramic - resistor, which has a larger mass than the respective component of the control circuit (CC),
- a resistor, the exposed metal surface of which is larger than that of the respective component of the control circuit (CC), wherein the sensor component (S1, S2, S3) is a resistor array in particular and the component of the control circuit (CC) is a single resistor in particular,
- a coil,
- an electrolytic capacitor,
- a diode, particularly a diode of an ASIC of the control unit (ECU), constructed with a reduced or omitted diffusion barrier compared with the respective component of the control circuit (CC).

8. Electronic control unit (ECU) for a motor vehicle having a control circuit (CC), which is constructed for controlling an operating function of the motor vehicle, and a monitoring circuit (SC), which contains at least one sensor component (S1, S2, S3),
wherein the control unit (ECU) is constructed by means of the monitoring circuit (SC) for
- recording a measured value (M1, M2, M3) by means of the at least one sensor component (S1, S2, S3),
- determining an actual value of a characteristic value representative for the thermal, mechanical and/or chemical loading of the control unit (ECU) on the basis of the recorded measured value (M1, M2, M3),
- comparing the actual value with a predetermined set-point value of the characteristic value, and
- emitting a signal (I) as a function of the result of the comparison,
**characterized in that**
- the control circuit (CC) contains a plurality of similar electric or electronic components (EC), which are part both of the control circuit (CC) and of the monitoring circuit (SC) and are connected to one another in such a manner that together they contribute to controlling the operating function of the motor vehicle and that the failure of an individual component of the similar components (EC) does not impair the functionality of the control circuit (CC) for controlling the operating function, and
- the similar components (EC) constitute the sensor components (S1, S2, S3) and the monitoring circuit (SC) is constructed for detecting the failure of an individual or a portion of the similar components (EC) for determining the actual value.

9. Control unit (ECU) according to one of Claims 5 to 8, **characterized in that** the control circuit (CC), the monitoring circuit (SC) and the at least one sensor component (S1, S2, S3) are arranged together in a housing (H) of the control unit (ECU).

## Revendications

1. Procédé de surveillance d'un appareil de commande électronique (ECU) pour un véhicule automobile comprenant les étapes suivantes :
- fourniture de l'appareil de commande électronique (ECU), l'appareil de commande (ECU) présentant un circuit de commande (CC) qui est conçu pour commander une fonction de service du véhicule automobile, et un circuit de surveillance (SC) qui contient au moins un composant de capteur (S1, S2, S3),
- détection d'une valeur de mesure (M1, M2, M3) au moyen de l'au moins un composant de capteur (S1, S2, S3),
- détermination d'une valeur réelle d'une grandeur caractéristique représentative de la sollicitation thermique, mécanique et/ou chimique de l'appareil de commande (ECU) au moyen du circuit de surveillance (SC) à l'aide de la valeur de mesure (M1, M2, M3) détectée et comparaison de la valeur réelle à une valeur de consigne prédéfinie de la grandeur caractéristique,
- émission d'un signal (I) au moyen du circuit de surveillance (SC) en fonction du résultat de la comparaison, dans lequel la grandeur caractéristique est représentative de la sollicitation thermique, mécanique et/ou chimique de l'au moins un composant de capteur (S1, S2, S3),
**caractérisé en ce que**
soit
le circuit de commande (CC) est différent du circuit de surveillance (SC) et le circuit de commande (CC) présente au moins un composant électrique ou électronique (EC) qui est du même type que l'au moins un composant de capteur (S1, S2, S3) et qui est plus insensible par rapport à la sollicitation thermique, mécanique et/ou chimique que l'au moins un composant de capteur (S1, S2, S3)
soit
- - le circuit de commande (CC) contient une pluralité de composants (EC) électriques ou électroniques de même type qui font partie tant du circuit de commande (CC) que du circuit de surveillance (SC) et participent conjointement à la commande de la fonction de service du véhicule automobile et sont connectés entre eux de façon à ce que la défaillance d'un seul des composants (EC) de même type n'entrave pas la capacité de fonctionnement du circuit de commande (CC) pour commander la fonction de service et
- - les composants (EC) de même type représentent les composants de capteur (S1, S2, S3) et pour déterminer la valeur réelle, la défaillance de l'un ou d'une quantité partielle des composants (EC) de même type est détectée.

2. Procédé selon la revendication 1, comprenant les étapes supplémentaires :
- enregistrement de la valeur réelle,
- détection d'une valeur de mesure (M1, M2, M3) supplémentaire au moyen de l'au moins un composant de capteur (S1, S2, S3) à la suite de la comparaison de la valeur réelle avec la valeur de consigne,
- détermination d'une nouvelle valeur de mesure de la grandeur caractéristique au moyen du circuit de surveillance (SC) à l'aide de la valeur de mesure (M1, M2, M3) supplémentaire détectée et de la valeur réelle conservée en mémoire et comparaison de la nouvelle valeur réelle avec la valeur de consigne,
- émission d'un signal (I) supplémentaire au moyen du circuit de surveillance (SC) en fonction du résultat de la comparaison de la nouvelle valeur réelle avec la valeur de consigne.

3. Procédé selon l'une des revendications précédentes, **caractérisé en ce que** l'émission du signal (I) a lieu pendant le fonctionnement de l'appareil de commande (ECU) pour commander la fonction de service du véhicule automobile au moyen du circuit de commande (CC).

4. Procédé selon l'une des revendications précédentes, **caractérisé en ce que** le signal (I) émis est un signal d'avertissement et le signal (I) est représenté au moyen d'un élément d'affichage (Ind) acoustique et/ou optique et/ou est placé dans une mémoire d'erreurs (exM) du véhicule automobile.

5. Appareil de commande électronique (ECU) pour un véhicule automobile comprenant un circuit de commande (CC) qui est conçu pour commander une fonction de service du véhicule automobile et un circuit de surveillance (SC) qui comprend au moins un composant de capteur (S1, S2, S3),
l'appareil de commande (ECU) étant conçu pour, au moyen du circuit de surveillance (SC),
- détecter une valeur de mesure (M1, M2, M3) au moyen de l'au moins un composant de capteur (S1, S2, S3),
- à l'aide de la valeur de mesure (M1, M2, M3) détectée, déterminer une valeur réelle d'une grandeur caractéristique représentative de la sollicitation thermique, mécanique et/ou chimique de l'appareil de commande (ECU),
- comparer la valeur réelle à une valeur de consigne prédéfinie de la grandeur caractéristique, et
- en fonction du résultat de la comparaison, émettre un signal (I), dans lequel la grandeur caractéristique est représentative de la sollicitation thermique, mécanique et/ou chimique de l'au moins un composant de capteur (S1, S2, S3), **caractérisé en ce que**
- le circuit de commande (CC) est différent du circuit de surveillance (SC) et présente un composant électrique ou électronique ou - dans le cas de plusieurs composants de capteur (S1, S2, S3) - pour chaque composant de capteur, un composant électrique ou électronique (EC) qui est du même type que le composant de capteur (S1, S2, S3) respectif et qui est plus insensible par rapport à la sollicitation thermique, mécanique et/ou chimique que le composant de capteur (S1, S2, S3) respectif.

6. Appareil de commande (ECU) selon la revendication précédente, **caractérisé en ce que** le circuit de surveillance (SC) contient une pluralité de composants de capteur (S1, S2, S3) de différents types qui sont montés en particulier en série dans le circuit de surveillance (SC).

7. Appareil de commande (ECU) selon l'une des revendications précédentes 6 ou 7, **caractérisé en ce que** le composant de capteur (S1, S2, S3) ou les composants de capteur (S1, S2, S3) est/sont sélectionné(s) parmi le groupe suivant :
- une résistance - en particulier céramique - qui a une plus grande masse que le composant respectif du circuit de commande (CC),
- une résistance dont la surface métallique libre est plus grande que celle du composant respectif du circuit de commande (CC), le composant de capteur (S1, S2, S3) étant en particulier une rangée de résistances et le composant du circuit de commande (CC) étant en particulier une résistance unique,
- une bobine,
- un condensateur électrolyte,
- une diode, en particulier une diode d'un ASIC de l'appareil de commande (ECU) formée avec un blocage de diffusion réduit ou manquant par rapport au composant respectif du circuit de commande (CC).

8. Appareil de commande électronique (ECU) pour un véhicule automobile comprenant un circuit de commande (CC) qui est conçu pour commander une fonction de service du véhicule automobile et un circuit de surveillance (SC) qui comprend au moins un composant de capteur (S1, S2, S3),
l'appareil de commande (ECU) étant conçu pour, au moyen du circuit de surveillance (SC),
- détecter une valeur de mesure (M1, M2, M3) au moyen de l'au moins un composant de capteur (S1, S2, S3),
- à l'aide de la valeur de mesure (M1, M2, M3) détectée, déterminer une valeur réelle d'une grandeur caractéristique représentative de la sollicitation thermique, mécanique et/ou chimique de l'appareil de commande (ECU),
- comparer la valeur réelle à une valeur de consigne prédéfinie de la grandeur caractéristique, et
- en fonction du résultat de la comparaison, émettre un signal (I),
**caractérisé en ce que**
- le circuit de commande (CC) contient une pluralité de composants (EC) électriques ou électroniques de même type qui font partie tant du circuit de commande (CC) que du circuit de surveillance (SC) et sont connectés entre eux de façon à qu'ils participent conjointement à la commande de la fonction de service du véhicule automobile et que la défaillance d'un seul des composants (EC) de même type n'entrave pas la capacité de fonctionnement du circuit de commande (CC) pour commander la fonction de service et
- les composants (EC) de même type représentent les composants de capteur (S1, S2, S3) et le circuit de surveillance (SC) étant conçu pour déterminer la valeur réelle pour détecter la défaillance de l'un ou d'une quantité partielle des composants (EC) de même type.

9. Appareil de commande électronique (ECU) selon l'une des revendications 5 à 8, **caractérisé en ce que** le circuit de commande (CC), le circuit de surveillance (SC) et l'au moins un composant de capteur (S1, S2, S3) sont disposés conjointement dans un boîtier (H) de l'appareil de commande (ECU) .
